Europäisches Patentamt

European Patent Office

Office européen des brevets

(19)

(11) Veröffentlichungsnummer : **0 121 270**
**B1**

(12) **EUROPÄISCHE PATENTSCHRIFT**

(45) Veröffentlichungstag der Patentschrift :
**15.04.87**

(51) Int. Cl.⁴ : **G 02 B  5/18**, G 02 B  6/34,
G 02 B 27/44

(21) Anmeldenummer : **84200125.7**

(22) Anmeldetag : **31.01.84**

(54) Optische Phasengitteranordnung und Schaltvorrichtungen mit einer solchen Anordnung.

(30) Priorität : **03.02.83 DE 3303623**

(43) Veröffentlichungstag der Anmeldung :
**10.10.84 Patentblatt 84/41**

(45) Bekanntmachung des Hinweises auf die Patenterteilung : **15.04.87 Patentblatt 87/16**

(84) Benannte Vertragsstaaten :
**DE FR GB IT NL SE**

(56) Entgegenhaltungen :
**DE-A- 2 316 248**
**DE-A- 2 747 243**
**DE-A- 3 118 582**
**DE-U- 7 225 889**
**US-A- 4 360 251**

(73) Patentinhaber : **Philips Patentverwaltung GmbH**
**Billstrasse 80**
**D-2000 Hamburg 28 (DE)**
**DE**
**N.V. Philips' Gloeilampenfabrieken**
**Groenewoudseweg 1**
**NL-5621 BA Eindhoven (NL)**
**FR GB IT NL SE**

(72) Erfinder : **Dammann, Hans, Dr.**
**Eichenstrasse 27**
**D-2081 Tangstedt (DE)**
Erfinder : **Kurz, Heinrich, Dr.**
**Haidkamp 2**
**D-2080 Pinneberg (DE)**

(74) Vertreter : **Nehmzow-David, Fritzi-Maria et al**
**Philips Patentverwaltung GmbH Billstrasse 80 Postfach 10 51 49**
**D-2000 Hamburg 28 (DE)**

## Beschreibung

Die Erfindung betrifft eine optische Phasengitteranordnung mit Blaze.

Eine derartige Anordnung ist allgemein bekannt, beispielsweise aus « Applied Optics », Vol. 19, No. 14, 15. Juli 1980, S. 2276 bis 2278. Geblazete Phasengitter der dort dargestellten Art, bei denen die optische Weglänge senkrecht zu den Gitterfurchen einen nahezu sägezahnförmigen Verlauf aufweist, haben die Eigenschaft, Licht mit hohem Wirkungsgrad in eine bestimmte Beugungsordnung des Gitters zu lenken, die ihrerseits u. a. durch die Neigung der Gitterfurchen ausgewählt wird. Wie das restliche Licht auf die anderen Beugungsordnungen verteilt wird, ist im allgemeinen nicht von Interesse.

Mit einem derart ausgebildeten Gitter ist es aber nicht möglich, Licht mit einem hohen Wirkungsgrad auch in andere Beugungsordnungen zu lenken. Die einmal durch das gewählte Gitterprofil bestimmte Beugungsordnung ist somit unveränderlich.

Aufgabe der Erfindung ist es, eine optische Phasengitteranordnung zu schaffen, deren sägezahnförmiges optisches Weglängenprofil in einfacher Weise verändert werden kann, so daß eine wahlweise Umlenkung des Lichtes in unterschiedliche Beugungsordnungen und damit die Konstruktion einfacher optischer Schalter ermöglicht wird.

Diese Aufgabe wird gemäß der Erfindung dadurch gelöst, daß die Phasengitteranordnung aus wenigstens zwei sich in parallelen Ebenen gegenüberliegenden Untergittern mit parallel zueinander verlaufenden Gitterfurchen besteht, daß die Untergitter gleiche Gitterperioden besitzen und in ihren Ebenen in einer zu den Gitterfurchen senkrechten Richtung gegeneinander verschiebbar sind, daß die optische Weglänge eines Untergitters über jeweils eine Gitterperiode ($\Lambda$) einen wenigstens annähernd parabolischen konkaven bzw. konvexen Verlauf aufweist, und daß dieser Verlauf so ausgebildet ist, daß, wenn die Scheitel der konkaven bzw. konvexen Weglängenverläufe der Untergitter auf einer gemeinsamen Linie senkrecht zu den Gitterebenen liegen, die Summe ihrer optischen Weglängen konstant ist.

Befinden sich die Untergitter in einer solchen Stellung, daß sie symmetrisch zu einer senkrecht zu den Gitterebenen verlaufenden Linie liegen, so bedeutet das bei etwa zwei Untergittern, daß z. B. ein Gitterberg des einen Untergitters exakt über einem Gitterberg des anderen Untergitters zu liegen kommt. Auch können Gitterberg und Gittertal auf der gemeinsamen, senkrecht zur Gitterebene verlaufenden Linie liege. Diese Stellung der Untergitter soll im folgenden Grundstellung genannt werden und stellt den verschobenen Zustand der Untergitter gegeneinander dar.

In dieser Stellung ist die Summe der optischen Weglängen der Untergitter, jeweils senkrecht zu den Gitterebenen gesehen, konstant, und zwar über alle Gitterperioden hinweg.

Das bedeutet, daß ein auf die Phasengitteranordnung auftreffendes Lichtbündel, vorzugsweise bei senkrechter Inzidenz, die Gitterstruktur der Untergitter überhaupt nicht bemerkt, da keine optisch effektive Gitterstruktur besteht. Das Lichtbündel wird somit nicht aus seiner Richtung abgelenkt ; die Gitteranordnung hat in diesem Fall einen « Blaze » für die Nullte Ordnung.

Wird die Grundstellung der Untergitter aber verändert, indem diese um einen Bruchteil ihrer Gitterperiode gegeneinander verschoben werden, so ändert sich auch die optisch effektive Struktur der Phasengitteranordnung. Je nach Größe und Richtung der gegenseitigen Verschiebung der Untergitter wird aufgrund ihres besonderen optischen Weglängenprofils eine resultierende, geblazete Gitterstruktur erzeugt, durch die das einfallende Lichtbündel in eine höhere Gitterordnung abgelenkt wird, z. B. in die ± 1. Gitterordnung, oder in höhere Ordnungen. Es ist somit auf diese Weise möglich, den Blaze des Gitters zwischen verschiedenen Beugungsordnungen der Phasengitteranordnung hin- und herzuschalten, so daß diese als optischer Schalter verwendet werden kann.

Nach einer vorteilhaften Ausbildung der Erfindung sind die Untergitter digitale Phasengitter, d. h., die optische Weglänge ändert sich innerhalb einer Gitterperiode mehrmals sprunghaft. Dies kann beispielsweise dadurch erzielt werden, daß in ein transparentes Substrat mit konstantem Brechungsindex Stufen unterschiedlicher Höhe eingebracht werden, oder dadurch, daß bei gleicher Substratdicke nebeneinanderliegende Bereiche mit unterschiedlich hohem Brechungsindex erzeugt werden. Digitale Phasengitter haben die vorteilhafte Eigenschaft, daß sie relativ einfach herzustellen sind und gleichzeitig mit ihnen Phasengitteranordnungen mit relativ hohem Blaze-Wirkungsgrad erzeugt werden können, d. h. mit ihnen ist es möglich, einen sehr großen Teil des einfallenden Lichtes in eine gewünschte Beugungsordnung abzulenken, wobei nur sehr wenig Licht in die benachbarten Beugungsordnungen fällt.

Nach einer anderen Ausbildung sind die Untergitter analoge Phasengitter, die ebenfalls als Relief- und/oder Brechungsindexgitter ausgebildet sein können. Analoge Phasengitter mit geeignetem Brechungsindexprofil haben dabei die vorteilhafte Eigenschaft, daß sie in einfacher Weise gegeneinander verschoben werden können, da sie in Form ebener Platten mit konstanter Dicke aufeinander liegen, was ebenso auch für digitale Brechungsindexgitter gilt.

Nach einer anderen vorteilhaften Weiterbildung der Erfindung trägt ein als Reliefgitter ausgebildetes Untergitter auf seiner Oberfläche eine Spiegelschicht, wodurch erreicht wird, daß so aufgebaute Phasengitteranordnungen auch als Reflexionsgitteranordnungen einsetzbar sind.

Eine besonders vorteilhafte Ausbildung der Erfindung liegt in einem optischen Schalter, der ein erstes optisches Tor und mehrere zweite optische Tore aufweist, und der ferner ein lichtablenkendes Element zur optischen Verbindung des ersten Tores mit nur einem zweiten Tor besitzt. Bei diesem optischen Schalter ist das lichtablenkende Element eine Phasengitteranordnung nach der Erfindung, also eine solche nach den Ansprüchen 1 bis 8, bei dem die zweiten optischen Tore in den zentralen Beugungsordnungen der Phasengitteranordnung positioniert sind.

Es ist bereits über verschiedene Typen von optischen Schaltern mit mechanisch bewegten Teilen berichtet worden. So werden z. B. Pentagonal-Prismen verwendet (J. Minowa, Y. Fujii, Y. Nagata, T. Aoyama, K. Doi : Non-blocking 8 × 8 optical matrix switch for fibre-optic communication, Electron. Letters 1980, Bd. 6, Nr. 11, S. 422-423), die mit Hilfe von kleinen Elektromagneten in den Strahlengang gefahren werden, den Strahl umlenken und somit umschalten. Man kann auch direkt optische Glasfasern parallel zu ihren Stirnflächen gegeneinander bewegen (siehe z. B. T. P. Tanaka, M. Maeda, Y. Shimohori, H. Takashima, I. Kondo : Simple and reliable optical bypass switch for fibre-optic data bus application, 7th European Conf. on Optical Comm., 1981, Copenhagen, p. 15-1) und so wahlweise in verschiedene Fasern überkoppeln.

Nichtmechanische optische Schalter können mit Hilfe des magneto-optischen oder des elektro-optischen Effekts realisiert werden. Magneto-optische Schalter (siehe z. B. M. Shirasaki, H. Takamatsu, T. Obokata : Bi-stable magneto-optic switch for multimode optical fiber, Appl. Opt. *21* (1982), S. 1943-49) arbeiten an sich nur für polarisiertes Licht und können nur mit zusätzlichen, recht aufwendigen Mitteln auch für unpolarisiertes Licht verwendet werden. Elektro-optische Effekte werden in integriert-optischer Technik zum Schalten benutzt (siehe z. B. E. M. Philipp-Rutz, R. Linares, M. Fakuda : Electro-optic Bragg diffraction switches in low crosstalk integrated-optics switching matrix, Appl. Opt. *21* (1982), pp. 2189-94).

Gegenüber all diesen optischen Schaltern besitzt der Schalter nach der Erfindung die Vorteile eines relativ einfachen Aufbaus mit geometrisch vorgegebenen Strahlengängen, einer nur geringen, zur Verschiebung der Untergitter erforderlichen Leistungsaufnahme, eines polarisationsunabhängigen Betriebes bei gleichzeitig nur geringen Verlusten, und die einer großen Übersprechdämpfung.

Selbstverständlich lassen sich mit derartigen optischen Schaltern auch optische Schaltfelder mit mehreren Eingangs- und Ausgangstoren aufbauen. Bei ihnen ist jedes Eingangs- und Ausgangstor ein erstes Tor eines optischen Schalters nach Anspruch 9, wobei die Zahl der zweiten Tore eines jeweiligen eingangs- bzw. ausgangsseitigen Schalters der Anzahl der ausgangs- bzw. eingangsseitigen Schalter entspricht, und wobei die zu je einem Eingangs- bzw. Ausgangsschalter gehörenden zweiten Tore jeweils mit einem zweiten Tor unterschiedlicher Ausgangs- bzw. Eingangsschalter optisch verbunden sind. Dieses Schaltfeld ermöglicht es, Information, z. B. moduliertes Licht, von jedem der Eingangstore auf jedes gewünschte Ausgangstor zu übertragen, ohne daß die anderen Ausgangstore die Information empfangen.

Eine andere vorteilhafte Weiterbildung der Erfindung lehrt den Aufbau optischer Konzentratoren mit einer Anzahl von optischen Eingangstoren und einer geringeren Anzahl von Ausgangstoren. Bei diesen Konzentratoren sind Gruppen von Eingangstoren jeweils diejenigen eines optischen Schaltfeldes nach Anspruch 10, wobei jeweils ein Ausgangstor des Konzentrators das erste Tor eines optischen Schalters nach Anspruch 9 ist, und wobei die zu jeweils einem optischen Schaltfeld gehörenden Ausgangstore jeweils mit einem zweiten Tor unterschiedlicher optischer Schalter verbunden sind.

Konzentratoren dieser Art dienen dazu, über eine von mehreren Eingangsleitungen ankommendes Licht wahlweise auf eine bestimmte Ausgangsleitung, z. B. Fernleitung, zu übertragen, wobei die Anzahl der Ausgangsleitungen kleiner als die der Eingangsleitungen ist. Konzentratoren bieten ferner den Vorteil, daß die Anzahl der zweiten Tore der optischen Schalter relativ klein bleiben kann.

Die Zeichnung stellt Ausführungsbeispiele der Erfindung dar. Es zeigen :

Figur 1a eine Phasengitteranordnung mit zwei stufenförmigen (digitalen) Untergittern in der Grundstellung, wobei die Untergitter eine ungerade Anzahl von Stufen pro Gitterperiode besitzen,

Figur 1b dieselbe Phasengitteranordnung im verschobenen Zustand,

Figur 1c das resultierende optische Weglängenprofil der Phasengitteranordnung nach Fig. 1b,

Figur 2a eine Phasengitteranordnung mit zwei stufenförmigen (digitalen) Untergittern in der Grundstellung, wobei die Untergitter eine gerade Anzahl von Stufen pro Gitterperiode besitzen,

Figur 2b dieselbe Phasengitteranordnung im verschobenen Zustand,

Figur 2c das resultierende optische Weglängenprofil der Phasengitteranordnung nach Fig. 2b,

Figur 3a das Phasenprofil einer Phasengitteranordnung, deren Untergitter kontinuierliche (analoge) Phasengitter sind, die gegeneinander um die Strecke $\varepsilon$ verschoben sind,

Figur 3b das resultierende Phasenprofil der Phasengitteranordnung nach Fig. 3a,

Figur 4 eine Phasengitteranordnung mit zwei digitalen Untergittern, von denen eines an seiner Oberfläche verspiegelt ist,

Figur 5 einen optischen Schalter mit einer Phasengitteranordnung nach der Erfindung,

Figur 6 ein optisches Schaltfeld mit mehreren optischen Schaltern, und

Figur 7 einen optischen Konzentrator mit neun Eingängen und drei Ausgängen.

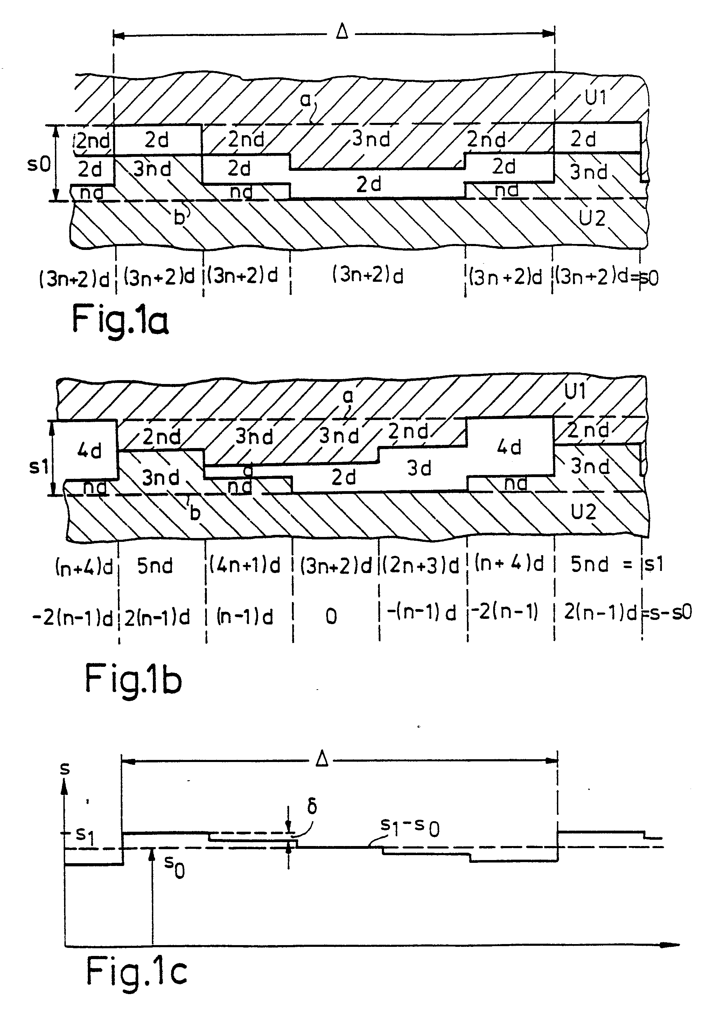

Zunächst soll an dem einfachen Beispiel der Fig. 1 gezeigt werden, wie bei einer Transmissions-Phasengitteranordnung, die aus zwei stufenförmig strukturierten Untergittern U1 und U2 besteht, der Blaze zwischen z. B. den drei zentralen Beugungsordnungen — 1, 0, + 1 umgeschaltet werden kann. Die Furchenprofile der beiden Untergitter U1, U2 sind stufenförmige Oberflächenreliefs (auch digitale Oberflächenstrukturen genannt), die genau ineinander passen und aus dem gleichen Material bestehen. Ein Profil ist genau ein Abdruck des anderen Profils, d. h. eine (negative) Kopie. Derartige Profile können im Original durch flächenselektive Ätzprozesse erzeugt. Kopien von diesen Originalen und Kopien von Kopien lassen sich z. B. durch einen Photopolymerisationsprozeß in bestimmten Kunststoffen herstellen.

Die Anzahl der Stufen in den Untergittern U1, U2 pro Gitterperiode $\Delta$ ist ungerade, nämlich beispielsweise 5, so daß eine Stufe doppelter Breite vorliegt, die in symmetrischer Aufteilung als Grundstufe angesehen werden kann. Für den Anstieg der Stufenhöhen von dieser mittleren Grundstufe zum Rand der Gitterperiode $\Delta$ gilt z. B. für das Untergitter U2 :

$$\text{Stufenhöhe} = 0,\ d,\ 3d,\ 6d,\ ...,\ 1/2\ N\ (N + 1)\cdot d, \tag{1}$$

wobei (2N + 1) die Anzahl der Stufenbreiten pro Gitterperiode ist.

Hier wird das Anwachsen der Stufenhöhen von der Mitte zum Rand im wesentlichen durch ein parabolisches Gesetz beschrieben ; zusätzlich ergibt sich jedoch infolge der doppelten Grundstufe noch ein linearer Anteil. Entsprechendes gilt auch für das Untergitter U1.

Für die geometrischen Stufenhöhen im Untergitter U1 der Fig. 1a ergibt sich somit ein Verlauf (von links nach rechts bei gleichen Stufenbreiten im Ausschnitt der Fig. 1a) von ..., 2d, 0, 2d, 3d, 3d, 2d, 0, 2d, ...

Die geometrischen Stufenhöhen im Untergitter U2 sind entsprechend : ...d, 3d, d, 0, 0, d, 3d, d, ...

Um eine Verschiebung der Untergitter U1 und U2 gegeneinander senkrecht zu den Gitterfurchen zu ermöglichen, werden die beiden Gitter um den Abstand 2d getrennt.

Die optische Weglänge $s_0$ (in Transmission) zwischen den beiden gestrichelt eingezeichneten Ebenen a und b in den beiden Untergittern U1, U2 ist nach Fig. 1a konstant (d. h. unabhängig vom Ort), nämlich

$$s_0 = (3n + 2)d, \tag{2}$$

wobei n der Brechungsindex des dielektrischen Materials und d das betrachtete Wegstück ist.

Dies bedeutet, daß im Gesamtgitter der Fig. 1a eine optisch effektive Gitterstruktur überhaupt nicht besteht, d. h. in diesem Fall hat die Phasengitteranordnung einen Blaze für die O. Ordnung (die gerade Richtung).

Wird nun, wie in Fig. 1b gezeigt, z. B. das Untergitter U1 um eine Stufenbreite (typischerweise um ca. 10 μm) nach links verschoben, so erhält man für die optischen Weglängen zwischen den beiden gestrichelten Ebenen a und b in den betreffenden Bezirken von links nach rechts eine optische Weglänge $s_1$ von

$$s_1 = ...,\ (n + 4)d,\ 5nd,\ (4n + 1)d,\ (3n + 2)d;\ (2n + 3)d,\ (n + 4)d,\ 5nd,\ (4n + 1)d,\ ... \tag{3}$$

und somit eine Differenz der optischen Weglängen von

$$s_1 - s_0 = ...,\ -2\ (n-1)d,\ 2(n-1)d,\ (n-1)d,\ 0,\ -(n-1)d,\ -2(n-1)d,\ 2(n-1)d,\ (n-1)d,\ ... \tag{4}$$

Dieses optische Weglängenprofil der Gesamtgitteranordnung ist in Fig. 1c dargestellt. Man sieht, daß $s_1$ (und $s_1 - s_0$) ein regelmäßiges, fünfstufiges Profil ist, das einen « digitalen » Blaze hat, wenn die optische Stufenhöhe (Differenz der Phasenverzögerungen zwischen zwei benachbarten Stufen) $\lambda/5$ beträgt ($\lambda$ = Lichtwellenlänge). Nach Fig. 1b ist diese optische Stufenhöhe $(n-1)d$, so daß $(n-1)d = \lambda/5$ gelten muß. Phasengitter mit derartigen Profilen sind bekannt und bereits ausführlich untersucht worden (siehe z. B. H. Dammann : Spectral characteristic of stepped-phase gratings, Optik *53* (1979), S. 409-417 ; Blazed synthetic phase-only holograms, Optik 31 (1970), S. 95-104).

Aus derselben Literaturstelle ist auch bekannt, daß mit derartigen fünfstufigen Phasenprofilen (Gitterfurchen) ein Blaze-Wirkungsgrad von (theoretisch) 87,4 % für die erste Beugungsordnung erreicht werden kann, wobei überhaupt kein Licht in die benachbarten Beugungsordnungen gelenkt wird. Die Bedingung hierfür lautet allgemein :

$$\varphi(\lambda) - 2\,\pi\frac{q}{P} = k\cdot 2\cdot\pi \tag{5}$$

($\lambda$ = Lichtwellenlänge ; q = Beugungsordnungszahl, hier : q = + 1 ; P = Anzahl der Stufen pro Gitterperiode $\Delta$, hier : P = 5 ; k = ganze Zahl). $\varphi(\lambda)$ ist die Phasenverzögerung, die in einer Grundstufe des Profils erzeugt wird. Nach Fig. 1c ist die entsprechende Weglängendifferenz $\delta = (n-1)d$, so daß wegen

$$\varphi(\lambda) = 2\,\pi\frac{\delta}{\lambda} \tag{6}$$

$$(n-1)d = \left(k + \frac{q}{P}\right)\cdot\lambda \tag{7}$$

folgt. Für ein einfaches, praktisch wichtiges Beispiel (k = 0, q = 1, P = 5, n — 1 = 0,5, $\lambda$ = 1 μm) erhält

4

**0 121 270**

man d = 0,4 μm. Untergitter mit den erforderlichen, maximalen Ätztiefen ca. 1 μm lassen sich ohne Schwierigkeiten herstellen.

Die in Fig. 1 verwendeten Untergitter U1, U2 haben symmetrische Profile. Es ist deshalb klar, daß eine entsprechende Verschiebung des Untergitters U1 nach rechts (statt, wie in Fig. 1b gezeigt, nach links) einen Blaze-Effekt für die andere erste Beugungsordnung (Ordnungszahl = — 1) ergibt. Insgesamt läßt sich somit durch mechanisches Verschieben der Untergitter gegeneinander der Blaze-Effekt zwischen den drei zentralen Beugungsordnungen + 1, 0, — 1 hin- und herschalten. Die Größe der Verschiebung, die einer Stufenbreite entspricht, liegt typischerweise im Bereich um ca. 10 μm. Eine untere Grenze von ca. 1 μm ist physikalisch-optisch und technologisch durch die Gitterstruktur selbst gegeben, während eine obere Grenze durch die Realisierungsmöglichkeiten der Verschiebung (Forderung : einfach, schnell, billig, geringer Energieverbrauch) und die Forderung nach einer kompakten Bauweise der Gesamtanordnung gezogen wird.

Fig. 1 zeigt ein Beispiel von geeigneten stufenförmigen (« digitalen ») Gitterstrukturen für die Transmission von Licht. Es gibt aber weitere geeignete digitale Strukturen und auch geeignete kontinuierliche (« analoge ») Gitterstrukturen, und es besteht auch die Möglichkeit, in Reflexion zu arbeiten. Dabei können in vielen Fällen durch Weiter-Verschieben der Untergitter gegeneinander noch mehr als die drei zentralen Beugungsordnungen — 1, 0, + 1 ausgenutzt werden, z. B. auch die ± 2. Beugungsordnungen. Der technologische Aufwand der Gitterrealisierung ist bei der dann notwendig höheren Stufenzahl entsprechend größer.

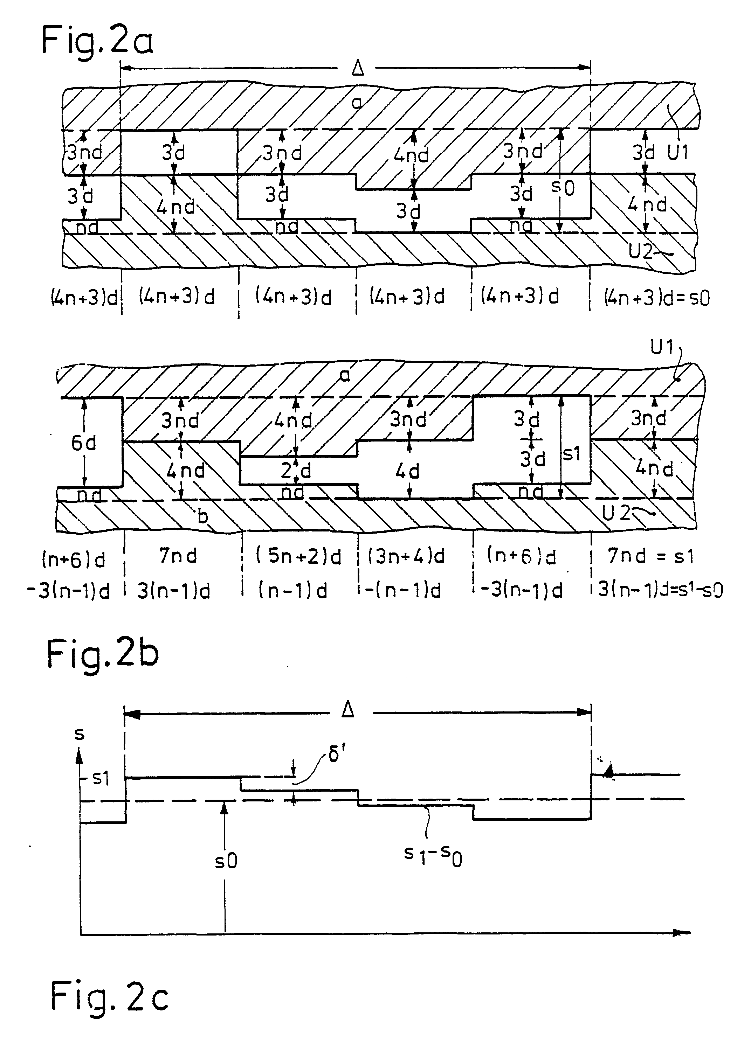

Die Fig. 2 bis 4 zeigen weitere Beispiele von Phasengitteranordnungen mit geeigneten Gitterstrukturen.

In der Fig. 2 ist eine in Transmission arbeitende Phasengitteranordnung dargestellt, deren digitale Untergitter U'1, U'2 ein vierstufiges Blaze-Profil erzeugen (vgl. Fig. 2c). Die Untergitter U'1, U'2 haben dabei eine gerade Anzahl von Stufen pro Gitterperiode $\Delta$, nämlich vier.

Die Stufen im Untergitter U'2 besitzen, von der Mitte bis zum Rand der Gitterperiode $\Delta$ gesehen, folgende Höhen : 0, d, 4d, 9d, ..., $N^2d$, wobei 2N die Anzahl der Stufenbreiten pro Gitterperiode $\Delta$ ist. Die Stufenhöhen zeigen somit innerhalb der Gitterperiode $\Delta$ einen rein parabolischen Verlauf, was natürlich dann auch für die optische Weglänge gilt. Entsprechend verläuft die Stufenform bzw. die optische Weglänge im Untergitter U'1, da dieses, genau wie bei dem Gitter in Fig. 1, ein Abdruck des Untergitters U'2 (negative Kopie) ist.

Fig. 2b zeigt den verschobenen Zustand beider Untergitter U'1, U'2 um eine Stufenbreite, so daß das in Fig. 2c gezeigte vierstufige optische Weglängenprofil $s_1 - s_0$ (entsprechend Fig. 1c) zustande kommt. Die Gleichungen 5 bis 7 gelten für die Berechnung der Stufenhöhen entsprechend. Nur ist dann P = 4 (Anzahl der Stufen pro Gitterperiode $\Delta$). $\delta'$ ist hier $2(n-1)d$, wie aus Fig. 2b zu entnehmen ist.

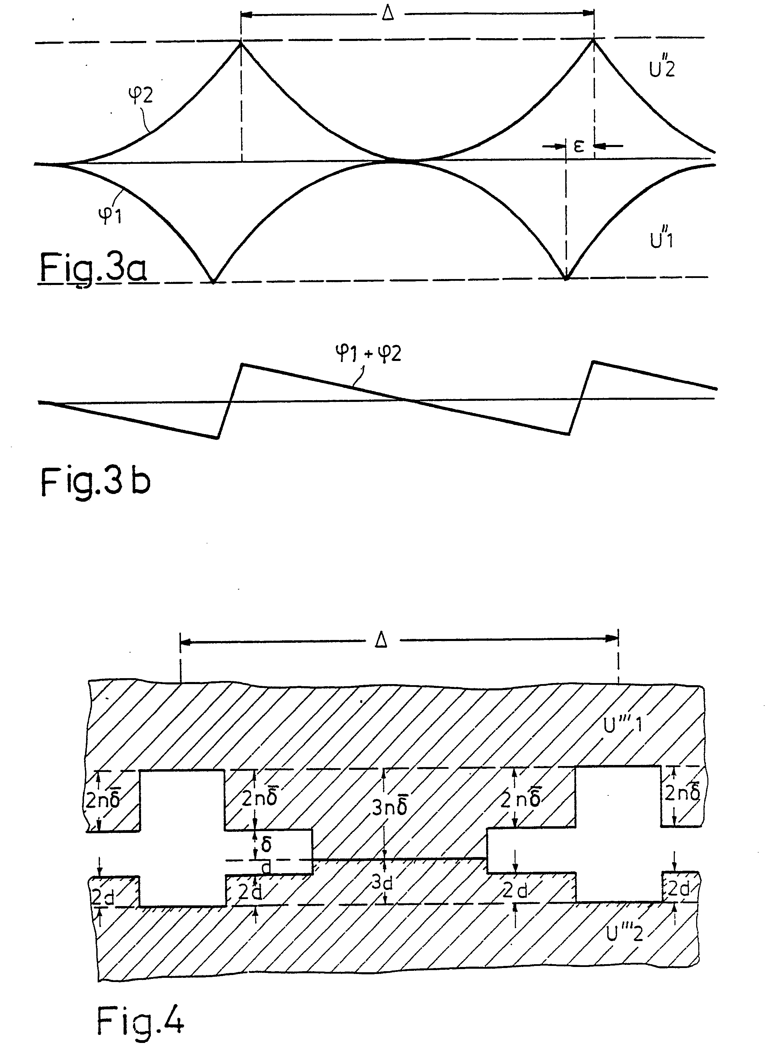

In Fig. 3a, b ist ein Beispiel für eine Phasengitteranordnung dargestellt, die analoge Untergitter U''1, U''2 besitzt, bei denen sich die optische Weglänge kontinuierlich innerhalb der Gitterperiode $\Delta$ in quadratischer Weise ändert, beispielsweise dadurch, daß das Oberflächenprofil der Untergitter entsprechend wellenförmig ausgebildet ist.

Fig. 3a zeigt die entsprechenden Profile der Phasenverzögerungen, $\varphi_1$ und $\varphi_2$ für die beiden Untergitter U''1, U''2, die ebenfalls einen quadratischen Verlauf aufweisen. Dabei gilt

$$\varphi = \varphi_0 \left( \frac{x - x_m}{\Delta/2} \right)^2 , \qquad (8)$$

wobei x die Ortskoordinate senkrecht zu den Gitterfurchen, $x_m$ die Ortskoordinate in der Furchenmitte, also bei /2, die Gitterperiode und $\pm \varphi_0$ die maximale bzw. minimale Phase ist.

Für das Untergitter U2 gilt z. B. $\varphi_2 = \varphi$ (im unverschobenen Fall), für das Untergitter U1 dann $\varphi_1 = -\varphi$. In Fig. 3a sind diese beiden Profile, um die Strecke $\varepsilon$ gegeneinander verschoben, übereinander gezeichnet, und Fig. 3b zeigt das resultierende Phasenprofil $\varphi_1 + \varphi_2$. Dieses Phasenprofil $\varphi_1 + \varphi_2$ hat die Form des Sägezahns, des bekannten Blaze-Profils. Der « Glanzwinkel » dieses Profils läßt sich durch geeignete Wahl der Verschiebung $\varepsilon$ einstellen. So kann man wählen, für welche zentrale Beugungsordnung der Blaze-Effekt auftritt. Bei fest vorgegebener Beugungsordnung hängt dabei die notwendige Verschiebung $\varepsilon$ von der maximalen Phasenverschiebung $\varphi_0$ ab. Je größer diese Phase $\varphi_0$ gewählt werden kann, umso kleiner ist die notwendige Verschiebung $\varepsilon$. $\varepsilon$ soll möglichst klein im Vergleich zu $\Delta$ sein, da eine zu starke Neigung der Flanken des Sägezahnprofils vermieden werden soll. Bei $\varphi_0 = 2\pi$ z. B. braucht man eine Verschiebung $\varepsilon$ von ca. $1/8 \Delta$, um den Blaze für die 1. Ordnung einzustellen.

Analoge Phasengitter mit parabolischem Phasenprofil werden entweder durch Reliefgitter oder Brechungsindexgitter realisiert. In jedem Fall muß gelten, daß die Differenz der optischen Weglängen zwischen der Mitte und dem Rand einer Gitterperiode größer als die Wellenlänge $\lambda$ der einfallenden Lichtwelle ist, wenn der Blaze für eine Verschiebung von 1/8 der Gitterperiode erreicht werden soll. Bei Reliefgittern wird die Oberfläche so stark moduliert, daß die periodische Phasenänderung der einfallenden Lichtwelle durch die Variation in der Schichtdicke des Materials mit der homogenen Brechzahl n erfolgt. Reliefgitter können preiswert durch Prägen von Kunststoffplatten hergestellt werden, wobei der Prägestempel aus Hartmetall durch reaktives Sputterätzen geformt wird. Die Negativform des Prä-

5

gestempels wird durch geeignete Einstellung des Druckes des reaktiven Gases, der Energie und des Auftreffwinkels der Sputterionen (Ar$^+$) und des Maskenprofils kontrolliert.

Wesentlich weniger störanfällig ist die (piezoelektrische) Verschiebung von planparallelen Platten, die ein analoges Brechungsindexgitter aufweisen. Der maximale Indexsprung innerhalb einer Gitterperiode muß dabei größer als der Quotient aus Plattendicke d und der Wellenlänge sein (ca. 1,5 λ/d). Bei einer Plattendicke von d = 1 mm muß der Indexsprung mindestens einen Wert von $1.5 \cdot 10^{-3}$ aufweisen.

Es ist bekannt, daß der Brechungsindex bei der Herstellung von synthetischen Kristallen nach dem Czochralski-Verfahren durch externe elektrische Felder gezielt beeinflußt werden kann. Durch Elektrotransportprozesse wird durch eine periodische Variation des elektrischen Stromes während des Wachstums ein Indexgitter mit kontrollierbarem Brechzahlprofil innerhalb des Kristalles erzeugt. Daraus können Platten geeigneter Geometrie und nahezu deckungsgleicher Gitterstruktur geschnitten werden.

Ein ähnliches Verfahren ist die Dotierung von Materialien mit Fremdatomen, entweder durch Ionenbeschuß, der durch geeignete Maskenprofile periodisch moduliert wird, oder durch thermische Diffusion von Fremdatomen, die in geeigneten Konzentrationsprofilen an der Oberfläche von transparenten elektro-optischen Kristallen aufgebracht werden. Das parabolische Brechzahlprofil kann wiederum über ein geeignetes Maskenprofil und über Diffusionslängen der Fremdatome — die im wesentlichen quadratisch von der Diffusionszeit abhängen — kontrolliert erzeugt werden.

Die Fig. 4 zeigt ein Beispiel für eine Phasengitteranordnung mit einstellbarem Blaze, die in Reflexion arbeitet, und deren Untergitter U'''1, U'''2 digitale Stufengittert sind. Das Untergitter U'''1 ist ein Transmissions-Phasengitter mit fünf Stufen pro Gitterperiode Δ, während das Untergitter U'''2 ein digitales fünfstufiges Gitter ist, das auf seiner Oberfläche eine das Licht reflektierende Schicht trägt. Die Strukturen dieser Untergitter entsprechen den Strukturen der in Fig. 1 beschriebenen Phasengitter. Wegen der Reflexion am Untergitter U'''2 und des damit verbundenen zweimaligen Durchgangs des Lichtes durch das Untergitter U'''1 ergeben sich jedoch andere Stufenhöhen. Allgemein gilt, daß

$$(n - 1)\, \overline{\delta} = \frac{\lambda}{10} = d \qquad\qquad (9)$$

ist,

wobei λ die Wellenlänge des Lichtes, n bzw. $\overline{\delta}$ der Brechungsindex bzw. die Stufenhöhe des Untergitters U'''1, und d die Stufenhöhe des Untergitters U'''2 ist.

Für die Verschiebung der in den Fig. 1 bis 4 gezeigten Untergitter eignen sich besonders piezoelektrische Antriebe, die sich durch extrem kleine Schaltenergien ($4 \cdot 10^{-5}$ J pro Verschiebung) und hohe Schaltfrequenzen ($\gtrsim$ 1 KHz) auszeichnen.

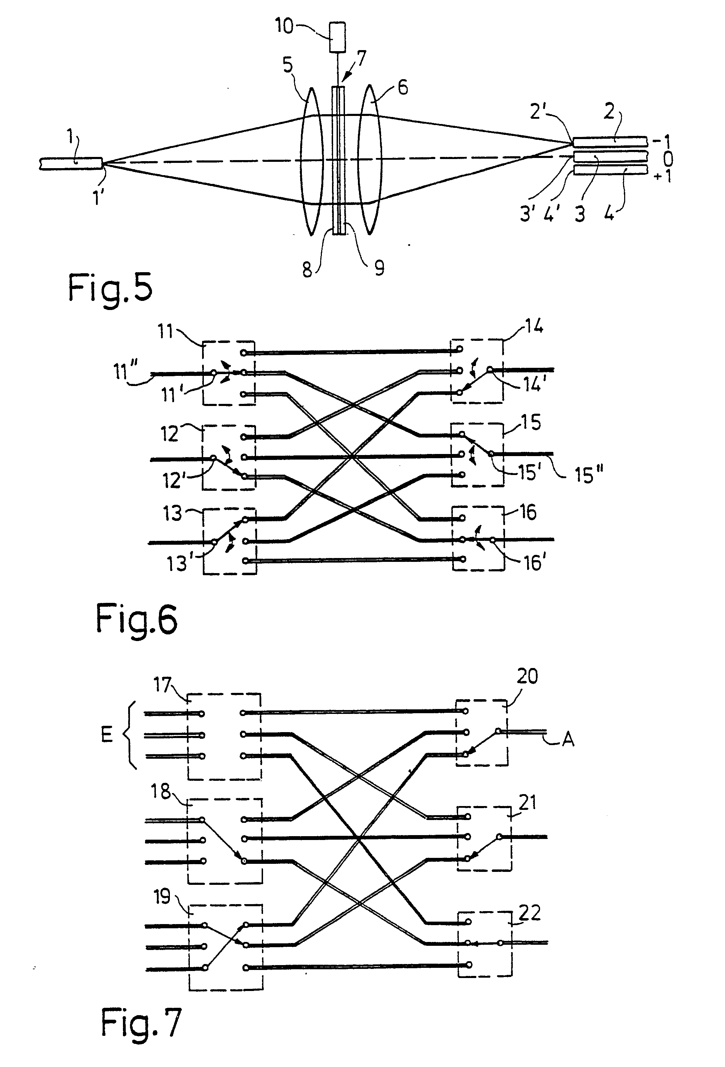

Mit Hilfe von Phasengitteranordnungen mit mechanisch einstellbarem Blaze lassen sich optische Schalter realisieren. Fig. 5 zeigt als Beispiel das Prinzip eines derartigen optischen Schalters, mit dem eine Glasfaser 1 wahlweise mit einer von drei weiteren Glasfasern 2, 3, 4 optisch verbunden werden kann. Optisch verbunden heißt dabei, daß ein Weg für die optischen Signale, die in den Glasfasern laufen, geschaffen wird.

Bei dem Schalter nach Fig. 5 wird die Endfläche 1' der Glasfaser 1 (erstes optisches Tor) durch ein aus zwei Konvexlinsen 5 und 6 bestehendes Abbildungssystem auf die Endfläche 2' (zweite optische Tore 2', 3', 4') einer zweiten Glasfaser 2 abgebildet, so daß eine optische Verbindung (ein optischer Weg) zwischen diesen beiden Fasern 1 und 2 zustande kommt. Durch Einschalten eines Transmissions-Phasengitters 7, das aus zwei gegeneinander verschiebbaren Untergittern 8 und 9 besteht und das zwischen den beiden Linsen 5 und 6 angeordnet ist, kann die zweite Glasfaser 2 aus einer Gruppe von drei Glasfasern 2, 3, 4 ausgewählt werden, die an den Orten der drei zentralen Beugungsordnungen + 1, 0, — 1 positioniert sind. Wie oben erläutert, läßt sich nämlich der Blaze des Gitters mechanisch zwischen den drei zentralen Beugungsordnungen hin- und herschalten, beispielsweise durch einen piezoelektrischen Antrieb 10. In Fig. 5 ist angenommen, daß dieser Blaze für die 1. Beugungsordnung eingestellt ist.

Die optischen Signale in den Glasfasern (Fig. 5) können von links nach rechts oder von rechts nach links verlaufen. Im ersten Fall kann der optische Schalter einen optischen Eingangskanal wahlweise mit einem von drei Ausgangskanälen verbinden, während im anderen Fall wahlweise einer von drei Eingangskanälen auf einen Ausgangskanal geschaltet wird.

Bei Verwendung eines Reflexionsgitters (z. B. nach Fig. 4) fehlt im Aufbau nach Fig. 5 die zweite Linse. Alle Glasfasern befinden sich dann auf einer Seite ; das Gitter wird schwach geneigt.

Fig. 6 zeigt schematisch, wie ein optisches Schaltfeld zwischen je 3 Ein- und Ausgangstoren (z. B. Glasfaserstirnflächen 11', 12', 13' bzw. 14', 15', 16') mit Hilfe von 6 optischen Schaltern 11-16 mit je 3 Schaltzuständen — 1, 0, + 1 realisiert werden kann. Die Eingangs- bzw. Ausgangstore 11'-16' sind dabei jeweils die ersten optischen Tore 1' des optischen Schalters nach Fig. 1. Man sieht, daß zum Herstellen einer Verbindung (z. B. zwischen den Fasern 11" und 15") die Gitterschalter 11 und 15 richtig geschaltet sein müssen. Daraus folgt, daß das Übersprechen in einem Schalter relativ hoch sein darf. Wird z. B. innerhalb eines Schalters 2 % auf die « falsche » Faser gelenkt, so bleibt die Übersprechdämpfung des Koppelfeldes trotzdem $< 10^{-3}$ beziehungsweise $> 30$ dB.

Fig. 7 zeigt schließlich, wie z. B. aus drei optischen Schaltfeldern 17, 18, 19 nach Fig. 6 und drei einzelnen optischen Schaltern 20, 21, 22 nach Fig. 5 ein optischer Konzentrator aufgebaut werden kann, der insgesamt neun Eingänge und drei Ausgänge besitzt. Dabei wird jeweils eine Gruppe von drei Eingängen auf ein optisches Schaltfeld nach Fig. 6 gelegt. Jede Eingangsleitung E kann dabei mit jeder Ausgangsleitung A verbunden werden (Konzentrator im vollkommenen Bündel). In entsprechender Weise lassen sich auch Konzentratoren mit mehr als neun Eingängen bzw. drei Ausgängen zusammenstellen, wobei sich durch geeignete Staffelung auch unvollkommene Bündel, bei denen ein Eingang nicht auf jeden Ausgang geschaltet werden kann, realisieren lassen.

**Patentansprüche**

1. Optische Phasengitteranordnung mit Blaze, dadurch gekennzeichnet, daß sie aus wenigstens zwei sich in parallelen Ebenen gegenüberliegenden Untergittern (U1, U2) mit parallel zueinander verlaufenden Gitterfurchen besteht, daß die Untergitter gleiche Gitterperioden besitzen und in ihren Ebenen in einer zu den Gitterfurchen senkrechten Richtung gegeneinander verschiebbar sind, daß die optische Weglänge eines Untergitters über jeweils eine Gitterperiode ($\Delta$) einen wenigstens annähernd parabolischen konkaven bzw. konvexen Verlauf aufweist, und daß dieser Verlauf so ausgebildet ist, daß, wenn die Scheitel der konkaben bzw. der konvexen Weglängenverläufe der Untergitter aus einer gemeinsamen Linie senkrecht zu den Gitterebenen liegen, die Summe ihrer optischen Weglängen konstant ist.

2. Phasengitteranordnung nach Anspruch 1, dadurch gekennzeichnet, daß ihre Untergitter (U1, U2) digitale Phasengitter sind.

3. Phasengitteranordnung nach Anspruch 1, dadurch gekennzeichnet, daß ihre Untergitter (U1, U2) analoge Phasengitter sind.

4. Phasengitteranordnung nach Anspruch 2 oder 3, dadurch gekennzeichnet, daß die Untergitter (U1, U2) als Relief- und/oder Brechungsindexgitter ausgebildet sind.

5. Phasengitteranordnung nach Anspruch 4, dadurch gekennzeichnet, daß ein als reliefgitter ausgebildetes Untergitter (U'''2) auf seiner Oberfläche eine Spiegelschicht trägt.

6. Phasengitteranordnung nach Anspruch 2 und 4 bis 5, dadurch gekennzeichnet, daß innerhalb einer Gitterperiode ($\Delta$) eine ungerade Gitterstufenzahl vorhanden ist und die optische Weglänge eines Untergitters von Gitterstufe zu Gitterstufe einem von einem linearen Anteil überlagerten parabolischen Verlauf folgt.

7. Phasengitteranordnung nach Anspruch 2 und 4 bis 5, dadurch gekennzeichnet, daß innerhalb einer Gitterperiode ($\Delta$) eine gerade Gitterstufenzahl vorhanden ist und die optische Weglänge eines Untergitters von Gitterstufe zu Gitterstufe einem rein parabolischen Verlauf folgt.

8. Phasengitteranordnung nach einem oder mehreren der Ansprüche 1 bis 7, dadurch gekennzeichnet, daß zur Verschiebung der Untergitter (U1, U2) ein piezoelektrischer Antrieb (10) vorgesehen ist.

9. Optischer Schalter, mit einem ersten optischen Tor und mehreren zweiten optischen Toren, sowie mit einem lichtablenkenden Element zur optishen Verbindung des ersten Tores mit nur einem der zweiten Tore, dadurch gekennzeichnet, daß das lichtablenkende Element eine Phasengitteranordnung (7) nach einem oder mehreren der Ansprüche 1 bis 8 enthält, und daß die zweiten Tore (2', 3', 4') in den zentralen Beugungsordnungen der Phasengitteranordnung positioniert sind.

10. Optisches Schaltfeld mit mehreren optischen Eingangs- und Ausgangstoren, dadurch gekennzeichnet, daß jedes Eingangs- (11', 12', 13') und Ausgangstor (14', 15', 16') ein erstes Tor eines optischen Schalters nach Anspruch 9 ist, daß die Zahl der zweiten Tore eines jeweiligen eingangs- bzw. ausgangsseitigen Schalters (11 ; 14) der Anzahl der ausgangs- bzw. eingangsseitigen Schalter entspricht, und daß die zu je einem Eingangs- bzw. Ausgangsschalter gehörenden zweiten Tore jeweils mit einem zweiten Tor unterschiedlicher Ausgangs- bzw. Eingangsschalter optisch verbunden sind.

11. Optisches Konzentrator mit einer Anzahl von optischen Eingangstoren und einer geringeren Anzahl von Ausgangstoren, dadurch gekennzeichnet, daß Gruppen von Eingangstoren jeweils diejenigen eines optischen Schaltfeldes nach Anspruch 10 sind, daß jeweils ein Ausgangstor des Konzentrators das erste Tor eines optischen Schalters nach Anspruch 9 ist, und daß die zu jeweils einem optischen Schaltfeld (17-19) gehörenden Ausgangstore jeweils mit einem zweiten Tor unterschiedlicher optischer Schalter (20-22) optisch verbunden sind.

12. Optischer Schalter nach Anspruch 10 oder 11, dadurch gekennzeichnet, daß die Zahl der Eingangstore gleich der Zahl der Ausgangstore ist.

13. Optischer Schalter nach Anspruch 9, 10, 11 oder 12, dadurch gekennzeichnet, daß die optischen Tore die Stirnflächen von Lichtleitfasern (1, 2-4) sind.

**Claims**

1. A blazed optical phase grating device, characterized in that it comprises at least two gratings (U1, U2) which are disposed opposite one another in parallel planes and which have grooves which extend parallel to each other, in that the gratings have equal grating periods and are movable relative to each other within their planes in a direction perpendicular to the grooves, and that within one grating period ($\Delta$)

**0 121 270**

the optical pathlength of a grating presents an at least substantially parabolic concave or convex variation and that said variation is such that, if the apexes of the concave or convex pathlength variations of the gratings are situated on a common line perpendicular to the grating planes, the sum of their optical pathlengths is constant.

2. A phase grating device as claimed in Claim 1, characterized in that in the gratings (U1, U2) are digital phase gratings.

3. A phase grating device as claimed in Claim 1, characterized in that the gratings (U1, U2) are analog phase gratings.

4. A phase grating device as claimed in Claim 2 or 3, characterized in that the gratings (U1, U2) are constructed as relief and/or refractive-index gratings.

5. A phase grating device as claimed in Claim 4, characterized in that a grating (U'''2) in the form of a relief grating is provided with a reflective layer on its surface.

6. A phase grating device as claimed in Claim 2, 4 or 5, characterized in that the number of grating steps within one grating period ($\Delta$) is odd and the optical pathlength of a grating varies from grating step to grating step in conformity with a parabolic function on which a linear portion is superposed.

7. A phase grating device as claimed in Claim 2, 4 or 5, characterized in that the number of grating steps within one grating period ($\Delta$) is even and the optical pathlength of a grating varies from grating step to grating step as a purely parabolic function.

8. A phase grating device as claimed in any of the Claims 1 to 7, characterized by a piezo-electric actuator (10) for shifting the gratings (U1, U2).

9. An optical switch, comprising a primary optical port and a plurality of secondary optical ports, and a light-deflecting element for optically connecting the primary port to one of the secondary ports, characterized in that the light-deflecting element comprises a phase-grating device (7) as claimed in any of the Claims 1 to 8, and in that the secondary ports (2', 3', 4') are positioned in the central diffraction orders of the phase grating device.

10. An optical switching matrix comprising a plurality of optical input and output ports, characterized in that each input port (11', 12', 13') and output port (14', 15', 16') is a primary port of an optical switch as claimed in Claim 9, the number of secondary ports of an input or output switch (11 ; 14) corresponds to the number of input or output switches, and in that each secondary port forming part of one of the input or output switches is optically connected to a secondary port of different output or input switches.

11. An optical concentrator comprising a number of optical input ports and a smaller number of output ports, characterized in that groups of input ports are those of an optical switching matrix as claimed in Claim 10, an output port of the concentrator is the primary port of an optical switch as claimed in Claim 9, and the output ports which form part of an optical switching matrix (17-19) are each time optically connected to a secondary port of different optical switches (20-22).

12. An optical switch as claimed in Claim 10 or 11, characterized in that the number of input ports is equal to the number of output ports.

13. An optical switch as claimed in Claim 9, 10, 11 or 12, characterized in that the optical ports are the end faces of optical fibre guides (1, 2-4).

**Revendications**

1. Trame de phase optique munie du « blaze », caractérisée en ce qu'elle est constituée par au moins deux sous-trames s'étendant dans des plans parallèles situés l'un en face de l'autre et dont les sillons de trame sont parallèles, sous-trames qui présentent la même période de trame et qui peuvent être déplacées, l'une par rapport à l'autre, dans leurs plans dans une direction perpendiculaire aux sillons de trame, alors que la longueur de trajet optique d'une sous-trame présente sur chaque fois une période de trame une variation concave, respectivement convexe, au moins approximativement parabolique telle que, lorsque les sommets des longueurs de trajet concave respectivement convexe des sous-trames se situe sur une ligne commune perpendiculaire aux plans des trames, la somme de leurs longueurs de trajet optique est constante.

2. Trame de phase selon la revendication 1, caractérisée en ce que ses sous-trames sont des trames de phase numériques.

3. Trame de phase selon la revendication 1, caractérisée en ce que ses sous-trames sont des trames de phase analogiques.

4. Trame de phase selon la revendication 2 ou 3, caractérisée en ce que les sous-trames sont réalisées sous forme de trames à relief et/ou à indice de réfraction.

5. Trame de phase selon la revendication 4, caractérisée en ce qu'une sous-trame formée comme trame à relief, présente une couche réflectrice appliquée sur sa surface.

6. Trame de phase selon les revendications 2, 4 et 5, caractérisée en ce que dans une période de trame est présent un nombre impair de gradins de trame et que la longueur de trajet optique d'une sous-trame présente une variation purement parabolique superposée d'une partie linéaire de gradin de trame à gradin de trame.

7. Trame de phase selon les revendications 2, 4 et 5, caractérisée en ce que dans une période de trame est présent un nombre pair de gradins de trame et que, la longueur de trajet optique d'une sous-trame présente une variation purement parabolique de gradin de trame à gradin de trame.

8. Trame de phase selon l'une ou plusieurs des revendications 1 à 7, caractérisée en ce que pour le déplacement des sous-trames est prévu un entraînement piézo-électrique.

9. Commutateur optique, muni d'une première porte optique et de plusieurs deuxièmes portes optiques, ainsi que d'un élément de déviation de lumière pour la liaison optique de la première porte à l'une des deuxièmes portes, caractérisé en ce que l'élément de déviation de lumière contient une trame de phase selon l'une ou plusieurs des revendications 1 à 8, et que les deuxièmes portes sont positionnées dans les ordres de diffraction centraux de la trame de phase.

10. Champ de commutation optique muni de plusieurs portes d'entrée et de sortie optiques, caractérisé en ce que chaque porte d'entrée et de sortie est une première porte d'un commutateur optique selon la revendication 9, que le nombre des deuxièmes portes d'un commutateur situé du côté d'entrée respectivement de sortie, correspond au nombre de commutateurs du côté de sortie respectivement d'entrée et que chacune des deuxièmes portes d'un commutateur d'entrée respectivement de sortie est reliée optiquement chaque fois à une deuxième porte d'un autre commutateur de sortie, respectivement d'entrée.

11. Concentrateur optique muni d'un nombre de portes d'entrée optiques et d'un plus faible nombre de portes de sortie, caractérisé en ce que des groupes de portes d'entrée sont celles d'un champ de commutation optique selon la revendication 10, qu'une porte de sortie du concentrateur est la première porte d'un commutateur optique selon la revendication 9 et que chacune des portes de sortie d'un champ de commutation optique est reliée optiquement à une deuxième porte d'un autre commutateur optique.

12. Commutateur optique selon la revendication 10 ou 11, caractérisé en ce que le nombre de portes d'entrées est égal au nombre de portes de sortie.

13. Commutateur optique selon la revendication 9, 10, 11 ou 12, caractérisé en ce que les portes optiques sont les faces terminales de fibres photoconductrices.

Fig.1a

Fig.1b

Fig.1c

1

## Fig.2a

## Fig.2b

## Fig.2c

Fig.3a

Fig.3 b

Fig.4

Fig.5

Fig.6

Fig.7